# EUROPÄISCHE PATENTSCHRIFT

(11) **EP 1 820 992 B1**
(45) Veröffentlichungstag und Bekanntmachung des Hinweises auf die Patenterteilung: **06.04.2011**
(21) Anmeldenummer: 07002873.3
(22) Anmeldetag: 10.02.2007
(51) Int. Cl.: F16D 65/14, F16D 55/00, F16D 65/38

(54) **Radbremse sowie Druckplatte für Radbremse**
Wheel brake and pressure plate for wheel brake
Frein de roue tout comme plaque de compression pour frein de roue

(30) Priorität: 20.02.2006 DE 102006008152
(43) Veröffentlichungstag der Anmeldung: 22.08.2007
(73) Patentinhaber: BPW Bergische Achsen KG, 51674 Wiehl (DE)
(72) Erfinder: Dowe, Günter, 51588 Nümbrecht (DE); Klaas, Thomas, 51590 Reichshof (DE)
(74) Vertreter: Christophersen & Partner

(56) Entgegenhaltungen:
- WO-A-93/22579
- WO-A-97/22814

## Beschreibung

Die vorliegende Erfindung betrifft eine Radbremse mit mindestens einem gegen einen Bremsbelag arbeitenden und innerhalb eines Bremsgehäuses bewegbaren Druckstempel, einer Zuspanneinrichtung zur Betätigung des Druckstempels, einer Nachstelleinheit mit einem sich in Abhängigkeit des Bremsverschleißes sukzessive drehenden Nachstellelement zur Nachstellung des Lüftspiels und einem in dem Bremsgehäuse angeordneten Rückstellelement ohne Nachstellfunktion zum Zurückdrehen der Nachstelleinheit im Falle eines Bremsbelagwechsels

Bei Radbremsen und insbesondere Scheibenbremsen mit integrierter Nachstelleinheit wird das Lüftspiel, d.h. der Abstand zwischen den Bremsbelägen und der Bremsscheibe, während des Bremsbetriebs laufend nachgestellt, wodurch die Druckstempel entsprechend dem Verschleiß der mit zunehmender Lebensdauer schmaler werdenden Bremsbeläge näher an die Bremsscheibe heran rücken. Hat der Bremsbelag der Radbremse seine zulässige Verschleißgrenze erreicht, so ist er auszubauen und gegen einen neuen zu ersetzen. Hierzu muss das Nachstellelement in seine Ausgangslage zurückgedreht werden, um so einen ausreichenden Platz für die Aufnahme eines neuen und damit breiteren Bremsbelages zu schaffen. Um diesen Rückstellvorgang für den mit dem Bremswechsel betrauten Monteur möglichst bedienerfreundlich zu gestalten, sind aus dem Stand der Technik verschiedene Rückstellelemente bekannt.

Aus der EP 0 937 210 B1 ist eine Radbremse mit einem Rückstellelement bekannt, welches bei der verschleißbedingten Nachstellung der Bremse eine Nachstellhülse in Drehung versetzt, und für die Rückstellung der Bremse mit einem Innensechskant zum Eingriff eines Montagewerkzeugs versehen ist. Das Rückstellelement ist bei derartigen Rückstelleinrichtungen ein Funktionsteil der Nachstelleinrichtung, weshalb es - beispielsweise bei Radbremsen mit Doppel-Druckstempel und zentraler Nachstelleinrichtung - für den Monteur oftmals nur schwer zugänglich ist. Wünschenswert ist daher eine funktionelle und auch räumliche Trennung von Nachstellelementen einerseits und Rückstellelementen andererseits.

Eine Radbremse der eingangs genannten Art, bei der das Rückstellelement ohne Funktion für die Nachstellung und räumlich getrennt von dieser ist, ist aus der EP 0 824 639 B2 bekannt. Das Gehäuse der dortigen Radbremse hat zwei Öffnungen, in welche wahlweise ein Verschlussstopfen oder ein Rückstellelement von außen her eingesetzt werden kann. Das Rückstellelement besteht aus einem kegelstumpfförmigen Zahnrad, das von außerhalb des Bremsgehäuses über einen Sechskant gedreht werden kann. Um eine Wirkverbindung zwischen dem Rückstellelement mit dem dazu quer verlaufenden Nachstellelement zu erzeugen, ist es beim Drehen des Sechskants erforderlich, das Rückstellelement entgegen einer Feder in Richtung des Bremsgehäuses zu drücken und so die Drehbewegung zu übertragen. Nachteilig bei diesem Rückstellelement ist, das es für Radbremsen, bei denen sich die Nachstelleinheit mittig im Gehäuse befindet, so etwa bei Radbremsen mit Doppel-Druckstempel und zentraler Nachstelleinrichtung, nicht geeignet ist. Auch ist das Rückstellelement aufgrund der Anordnung am Gehäuse und quer zu den Drehelementen der Nachstellung mit einer vergleichsweise aufwendig zu fertigenden Schrägverzahnung und einer zusätzlichen Druckfeder versehen.

Ein weitere Radbremse der eingangs genannten Art ist aus dem deutschen Gebrauchsmuster DE 86 33 923 U1 bekannt. Das darin verwendete Rückstellelement ist in einer gehäusefesten Position vergleichsweise aufwendig gestaltet. Es besteht aus einer Rückstellwelle, die über eine Freilaufkupplung mit einem Ritzel verbunden werden kann, um auf diese Weise eine Wirkverbindung mit dem Nachstellelement einzugehen.

Es ist die **Aufgabe** der vorliegenden Erfindung, eine Radbremse der eingangs genannten Art bereitzustellen, die sich durch eine funktionssicher arbeitende Rückstellung bei konstruktiv einfachem Aufbau auszeichnet.

Erfindungsgemäß wird zur **Lösung** dieser Aufgabe vorgeschlagen, dass das Rückstellelement drehbar an einem der Zuspannbewegung folgenden Bauteil gelagert ist.

Eine erfindungsgemäße Radbremse mit einem Rückstellelement an einem sich entsprechend der Zuspannbewegung bewegenden Bauteil zeichnet sich insbesondere durch einen konstruktiv einfachen Aufbau aus. Das Rückstellelement wird bei Betätigung der Druckstempel gemeinsam mit der Nachstelleinheit in Richtung auf die Bremsscheibe bewegt, wodurch beide Bauteile einen gleichbleibenden Abstand zueinander haben und sich die für das Zurückdrehen erforderliche Wirkverbindung konstruktiv einfach realisieren lässt. Als vorteilhaft ist ferner hervorzuheben, dass das Rückstellelement zwar mit dem Nachstellelement gekoppelt ist, die Nachstellung jedoch unabhängig von dem Rückstellelement funktioniert. Das Rückstellelement ist daher ohne Nachstellfunktion. Auch dies ist dem einfachen Aufbau der Radbremse zuträglich. Denn Rückstellelemente, die unabhängig von dem Nachstellbetrieb der Bremse sind, werden weniger stark und vor allem weniger häufig mit Kräften beaufschlagt, so dass sowohl in konstruktiver wie auch fertigungstechnischer Hinsicht einfache Rückstellelemente einsetzbar sind, und die Vorrichtung auch auf Dauer zuverlässig arbeitet.

Eine vorteilhafte Ausgestaltung sieht vor, dass das Bauteil eine in Richtung des Druckstempels in dem Bremsgehäuse bewegliche Druckplatte ist, gegen die sich die Zuspanneinrichtung bei der Zuspannung der Bremse abstützt. Beim Zuspannen vieler Radbremsen folgt die Druckplatte der axialen Bewegung des Nachstellelements, weshalb sie sich zur Unterbringung eines Rückstellelements besonders eignet. In diesem Zusammenhang ist es von Vorteil, wenn die Druckplatte an ihrer Rückseite eine Druckfläche aufweist, an der sich die Zuspanneinrichtung abstützt. Die Abstützung der Zuspanneinrichtung kann indirekt, d.h. unter Zwischenlage eines weiteren Bauteils, etwa einer Unterlegscheibe oder ähnlichen Zwischenteilen, oder auch direkt bzw. im Kontakt erfolgen. Bei der direkten Anlage kann die Druckfläche der Geometrie eines benachbarten Teils der Zuspanneinrichtung so angepasst werden, dass eine wirkungsvolle, d.h. großflächige Kraftübertragung von der Zuspanneinrichtung über die Druckplatte erfolgt.

Bei üblichen Zuspanneinrichtungen ist es oftmals von Vorteil, wenn die Druckfläche eine im Querschnitt schalenartige Ausnehmung der Druckplatte ist, in welcher sich z.B. ein Gelenk oder ein Exzenter einer bekannten Zuspanneinrichtung abstützen kann.

Vorteilhaft weist die sich gemeinsam mit dem Nachstellelement bewegende Druckplatte neben der Druckfläche angeordnet eine seitliche Erweiterung auf, an der das Rückstellelement gelagert ist. Da die Erweiterung seitlich neben der Druckfläche für die Anlage der Zuspanneinrichtung liegt, ist diese für den Monteur vergleichsweise gut erreichbar und nicht etwa durch die Zuspanneinrichtung blockiert. Zudem liegt dieser Bereich seitlich der Druckfläche und somit auch seitlich der bei der Zuspannung der Bremse zu übertragenden Kräfte. Das Rückstellelement wird daher nicht mit den bei der Zustellung auftretenden Kräften belastet. Auf das Rückstellelement wirkt erst dann eine nennenswerte Kraft, wenn dieses bestimmungsgemäß zur Rückstellung des Nachstellelements verwendet wird.

In diesem Zusammenhang ist es ferner von Vorteil, wenn die seitliche Erweiterung eine gegenüber der übrigen Druckplatte reduzierte Materialstärke aufweist, um auf diese Weise Materialkosten und überflüssiges Gewicht einzusparen.

Eine in konstruktionstechnischer Hinsicht besonders vorteilhafte Ausgestaltung sieht vor, dass das Nachstellelement mit einer Verzahnung versehen ist, die mit einer an dem Rückstellelement ausgebildeten Verzahnung kämmt. Das als Zahnrad ausgebildete Rückstellelement und die Außenverzahnung des Nachstellelements bilden so ein Getriebe, über welches das Nachstellelement von einer Position seitlich der Achse des Nachstellelements in seine Ausgangslage zurückgedreht werden kann. Insbesondere bei Radbremsen mit zentraler Nachstelleinheit und Doppeldruckstempel bietet diese seitliche Position dem Monteur Vorteile.

In diesem Zusammenhang ist es von Vorteil, wenn die Verzahnung des Rückstellelements weniger Zähne aufweist als die Verzahnung des Nachstellelements, um auf diese Weise ein insgesamt untersetzendes Getriebes zu erhalten, so dass die Rückstellung des Nachstellelements für den Monteur mit geringem Kraftaufwand durchzuführen ist.

In konstruktionstechnischer Hinsicht bietet es sich an, wenn das Rückstellelement innerhalb einer Öffnung der Druckplatte drehbar gelagert ist.

Fertigungstechnisch ist es von Vorteil, wenn das Rückstellelement ein durch Umformen hergestelltes Blechformteil ist. Derartige Blechformteile lassen sich einfach und kostengünstig auch in großen Stückzahlen herstellen. Da das Rückstellelement nicht an der Nachstellung beteiligt ist und insoweit nicht ständig Nachstellkräften ausgesetzt ist, wird es nur in Abständen von mehreren Monaten beim Austausch der Beläge belastet. Die dabei auftretenden Kräfte vermag auch ein einfaches Umform- bzw. Stanzteil zuverlässig aufzunehmen.

In diesem Zusammenhang ist es weiter von Vorteil, wenn das Rückstellelement einen hohlen Zapfen und eine Abwinklung aufweist. Auf diese Weise lässt sich das Rückstellelement einstückig gestalten. Der hohle Zapfen sowie die Abwinklung sind durch Umformen herstellbar. Der hohle Zapfen kann als Lagerzapfen dienen, wobei die Abwinklung ähnlich einer Unterlegscheibe eine Art Distanzstück der Stirnseite des Rückstellelements gegenüber der Druckplatte darstellt, wodurch eine leichtgängige Drehbarkeit erreicht wird.

Vorteilhaft ist das Rückstellelement mit Mitteln zum Eingriff eines Werkzeugs versehen, über welche der mit dem Bremswechsel betraute Monteur das Rückstellelement betätigen und die Rückstellung vornehmen kann. Die Eingriffsmittel können beispielsweise ein Innensechskant, ein TORX-Profil oder irgendein anderes Standard-Profil sein, so dass die Rückstellung des Nachstellelements mit herkömmlichen Werkzeugen erfolgen kann.

Schließlich ist es von Vorteil, wenn das Rückstellelement um eine zur Achse des Nachstellelements parallel versetzte Achse drehbar ist, so dass sich die Umfangsseite des Rückstellelements und der Umfang des Nachstellelements gegenüberstehen. Auf diese Weise eignen sich auch einfache Verzahnungen für beide Bauteile.

Die vorliegende Erfindung betrifft ferner eine Druckplatte für eine Radbremse, wobei die Rückseite der Druckplatte eine Druckfläche für eine Zuspanneinrichtung und ihre Vorderseite eine Anlage für eine Nachstelleinrichtung aufweist.

Druckplatten werden in vielerlei Ausführungen vor allem dazu verwendet, die von der Zuspanneinrichtung auf die Druckstempel bzw. die Bremsbeläge zu übertragenden Kräfte zu übertragen. Hierzu weisen die bekannten Druckplatten an ihrer Rückseite eine Druckfläche für die Zuspanneinrichtung auf, wohingegen ihre Vorderseite oftmals als Anlage für eine im Kraftfluss liegende Nachstelleinrichtung dient, die ein voreingestelltes Lüftspiel zwischen den Bremsbelägen und der Bremsscheibe während des Bremsbetriebes selbsttätig nachstellt.

Mit dem Ziel die bekannten Druckplatten mit zusätzlichen Funktionen zu versehen, wird für eine Druckplatte dieser Art erfindungsgemäß vorgeschlagen, dass diese mit einer seitlich der Druckfläche angeordneten Erweiterung mit Mitteln zur drehbaren Lagerung eines Rückstellelements zur Rückstellung eines Nachstellelements der Nachstelleinheit im Falle eines Bremsbelagwechsels versehen ist.

Durch das Vorsehen einer seitlichen Erweiterung mit Lagermitteln für das Rückstellelement dient die Druckplatte neben der Kraftübertragung auch zur Aufnahme eines mit einem Nachstellelement wirkverbundenen Rückstellelements, welches zum Zurückdrehen des Nachstellelements im Falle des Belagwechsels erforderlich ist. Aufgrund der seitlichen Erweiterung der Druckplatte ist es nicht erforderlich, separate Halterungen für das Rückstellelement etwa am Bremssattelgehäuse vorzusehen. Die Druckplatte übernimmt daher neben ihrer eigentlichen Druckübertragungsfunktion zusätzlich eine Haltefunktion für ein Rückstellelement, wodurch sich die zum Aufbau einer Radbremse erforderliche Anzahl von Bauteilen reduziert.

Vorteilhafte Ausgestaltungen der erfindungsgemäßen Druckplatte sind in den Unteransprüchen 15 bis 17 angegeben.

Weitere Einzelheiten und Vorteile der Erfindung werden nachfolgend unter Zuhilfenahme der Zeichnungen beispielhaft erläutert, in denen
- Fig. 1: einen Schnitt durch den Bremssattel einer Scheibenbremse einschließlich der Bremsscheibe und der Bremsbeläge,
- Fig. 2: eine Seitenansicht einer Nachstelleinheit mit Druckplatte,
- Fig. 3: eine Schnittdarstellung durch die Nachstelleinheit gemäß der Schnittlinie III-III in Fig. 2 mit zugehöriger Traverse sowie zwei Druckstempeln,
- Fig. 4: eine Schnittdarstellung der Nachstelleinheit sowie eines Rückstellelements entsprechend der Schnittlinie IV-IV in Figur 3,
- Fig.5: eine Explosionsansicht der Elemente der Nachstelleinrichtung sowie einer erfindungsgemäßen Druckplatte,
- Fig. 6: eine Ansicht eines erfindungsgemäßen Rückstellelements,
- Fig.7: eine Schnittdarstellung entsprechend der Schnittlinie VII-VII des in Fig. 6 dargestellten Rückstellelements,

### in teilweise schematisierter Darstellung zeigt.

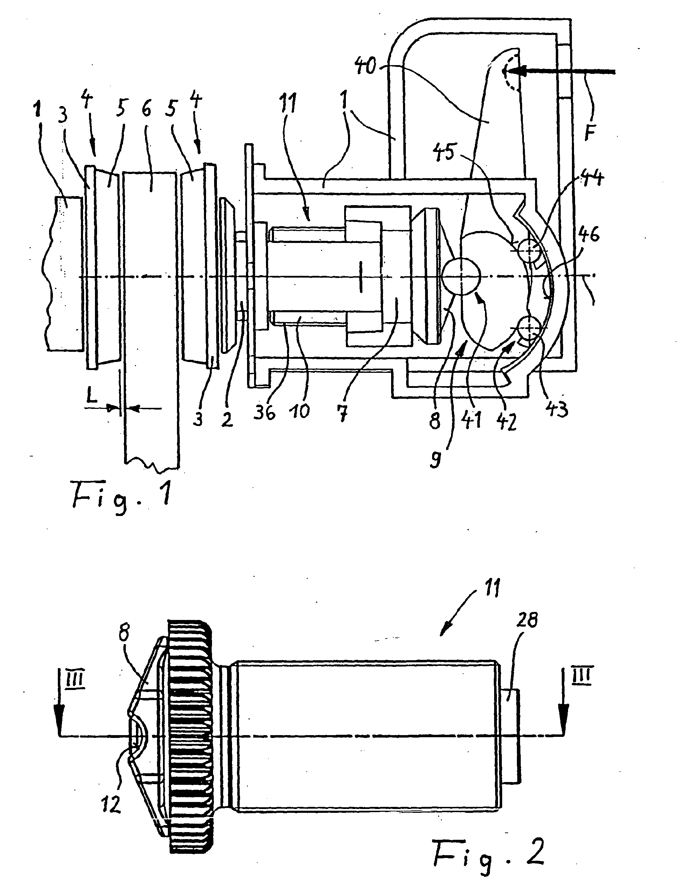

Fig. 1 zeigt in stark vereinfachter Darstellung einen Teil eines Bremsgehäuses 1 einer Fahrzeugscheibenbremse, die insbesondere als Fahrzeugbremse für Schwerlastfahrzeuge wie z.B. Lkw-Anhänger Anwendung findet. Es handelt sich um eine Bremse vom Doppelstempel-Typ, bei der zwei parallele Druckstempel 2 über eine Traverse 7 miteinander verbunden sind und gemeinsam an einer Belagplatte 3 eines Bremsbelags 4 anliegen. Die in Fig. 1 dargestellte Bremse wird über eine Zuspanneinrichtung 9 betätigt und verfügt ferner über eine integrierte Nachstelleinheit 11 zur Nachstellung eines gleichbleibend großen Lüftspiels L. Darunter verstanden wird ein bei unbetätigter Bremse unabhängig vom Bremsverschleiß gleichbleibender Abstand zwischen den Bremsbelägen 4 und der Bremsscheibe 6.

Die Zuspanneinrichtung 9 weist einen Zuspannhebel 40 auf, an dessen oberem Hebelende sich bei Betätigung der Bremse z.B. die Betätigungsstange eines Druckluft-Bremszylinders abstützt, und auf diese Weise eine Bremskraft F auf den Bremshebel 40 überträgt. Hierdurch verschwenkt der Zuspannhebel 40 über seine Wälzlagerung 42 in Richtung der Bremsscheibe 7. Die Wälzlagerung 42 lagert den Zuspannhebel 40 drehbar innerhalb des Bremsgehäuses 1 und besteht im Wesentlichen aus zwei zwischen zwei Wälzbahnen 45, 46 abrollenden Wälzkörpern 43, 44. Der Wälzlagerung 42 gegenüberliegend weist der Zuspannhebel 40 der Zuspanneinrichtung 9 ein Drehgelenk 41 auf, über welches er die Zuspannkraft auf die zentral zwischen den beiden Druckstempeln 2 der Bremse angeordnete Nachstelleinheit 11 überträgt.

Die Nachstelleinheit 11 ist an ihrem der Zuspanneinrichtung 9 zugewandten Ende mit einer Druckplatte 8 versehen (vgl. Fig. 2), die eine mit der Geometrie des Gelenks 41 korrespondierende, halbschalenartige Druckfläche 12 aufweist. An ihrem anderen Ende ist ein Gewindeelement 26 der Nachstelleinheit 11 an einem gegenüber dem Bremsgehäuse 1 starren Gehäuseteil 28 axial festgelegt.

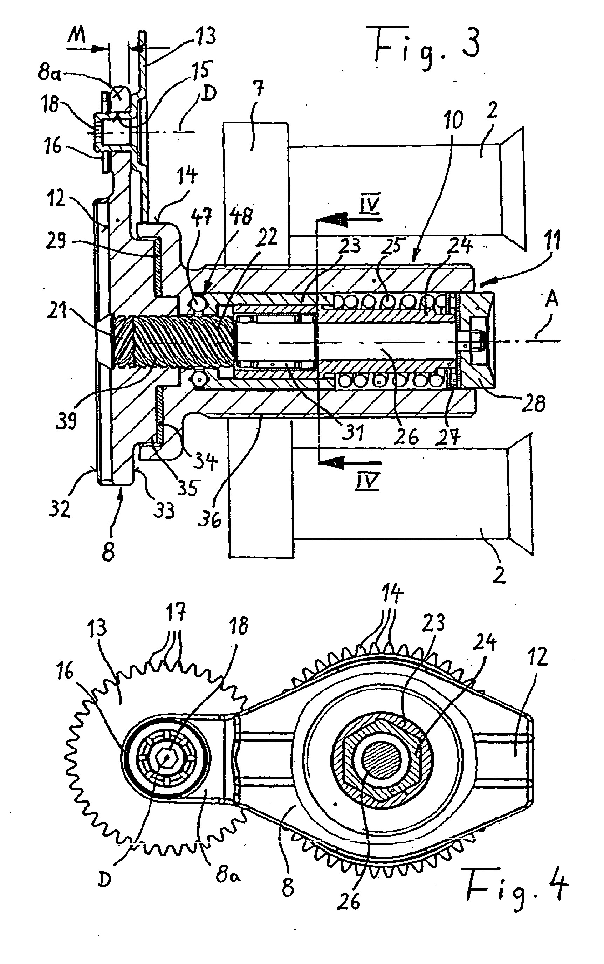

Einzelheiten der Nachstelleinheit 11 einschließlich der Druckplatte 5 sowie des Rückstellelements 13 lassen sich besser der Schnittdarstellung in Fig. 3 entnehmen. In Fig. 3 nicht geschnitten dargestellt ist das zentrale Gewindeelement 26 der Nachstelleinrichtung 11 sowie die in stark schematisiert dargestellter Form ergänzte Doppelstempel-Anordnung bestehend aus zwei Druckstempeln 2 und einer die beiden Druckstempel 2 starr miteinander verbindenden Traverse 7.

Die Nachstelleinheit 11 weist ein Nachstellelement 10 auf, welches sich zur Nachstellung der Bremse sukzessive dreht und über eine Schraubverbindung 36 in die Traverse 7 eingeschraubt ist, und zwar symmetrisch zwischen den beiden Druckstempeln 2. Am zuspannseitigen Ende des Nachstellelements 10 ist die starre Druckplatte 8 angeordnet, an deren Rückseite 32 die Druckfläche 12 für die Abstützung der Zuspanneinrichtung 9 angeformt ist. Die Druckfläche 12 ist nach Art einer schalenartigen Ausnehmung gestaltet, die sich parallel zur Traverse 7 erstreckt. Der die Druckfläche 12 aufweisende Teil der Druckplatte 8 dient im Wesentlichen der Kraftübertragung von der Zuspanneinrichtung 9 über das drehbare Nachstellelement 10 auf die Druckstempel 2 und somit letztlich auf die Bremsbeläge 4 (vgl. auch Fig. 1).

Zu einer Seite hin, bezogen auf die Längsachse A der Nachstelleinrichtung, ist an der Druckplatte 8 einstückig eine seitliche Erweiterung 8a angeformt. Die Erweiterung 8a befindet sich außerhalb der sich bei Betätigung der Bremse ergebenden Richtung des Kraftflusses. Die seitliche Erweiterung 8a weist daher eine geringere Materialstärke M auf als die unmittelbar im Kraftfluß liegenden Bereiche der Druckplatte 8. An der Vorderseite 33 der Druckplatte 8 ist ein zylindrischer Absatz 35 ausgebildet, der in eine runde Einsenkung des Nachstellelements 10 eingreift, wodurch die Druckplatte 8 über den Absatz 35 an dem Nachstellelement 10 zentriert wird. Die Stirnseite 34 des Absatzes 35 dient als gleitgelagerte Anlagefläche zwischen der Druckplatte 8 und dem sich hierzu drehenden Nachstellelement 10. Zur Reduzierung der Reibung zwischen den Anlageflächen ist eine flache Gleitscheibe 29 vorgesehen.

Für die Nachstellung weist die Druckplatte 8 ein Innengewinde 21 auf, das mit einem Außengewinde 39 eines zentral angeordneten Gewindeelements 26 eine Schraubverbindung mit vergleichsweise großer Gewindesteigung bildet. Diese Schraubverbindung 21, 39 ist neben ihrer großen Steigung auch durch ein vergleichsweise großes axiales Gewindespiel gekennzeichnet, welches betragsmäßig dem einzustellenden Lüftspiel L der Radbremse entspricht.

Wird daher die Druckplatte 8 bei Bremsbetätigung rückseitig mit einer Kraft beaufschlagt, so drückt sie über die Stirnseite des Nachstellelements 10 und die Schraubverbindung 36 auch die Traverse 7 und damit die beiden Druckstempel 2 in Richtung auf die Bremsscheibe 6. Erst nach Überwinden des Lüftspiels L gelangen die Gewindeflanken des Innengewindes 21 mit denen des Außengewindes 39 des axial festgelegten Gewindeelements 26 in Anlage. Bei weiterer Zustellung, d.h. wenn der Abstand zwischen den Belägen 4 und der Scheibe 6 aufgrund zunehmenden Verschleißes größer als das gewünschte Lüftspiel L ist, übt das drehfeste Druckstück 8 über sein Innengewinde 21 eine Kraft auf das Gewinde 39 des axial nicht beweglichen, aber drehbaren Gewindeelements 26 aus, so dass das Gewindeelement 26 bei einer über das Lüftspiel L hinausgehenden Zustellung zu drehen beginnt.

Die Drehung des Gewindeelements 26 wird über eine Einwegkupplung 31, die nur in eine Drehrichtung arbeitet, d.h. kuppelt, auf eine Hülse 24 übertragen. In der anderen Drehrichtung, d.h. beim Zurückdrehen, erfolgt über die Einwegkupplung 31 keine Übertragung der Drehbewegung zwischen den beiden Bauteilen 24 und 26. Die Hülse 24 wiederum ist bereichsweise mit einem Außensechskant versehen, der in einen entsprechenden Innensechskant einer weiteren Hülse 23 eingreift, vgl. auch Fig. 4. Hierdurch sind die beiden Hülsen 23, 24 zwar drehfest zueinander, gleichwohl aber axial in Richtung der Achse A gegeneinander verschieblich.

Die äußere Hülse 23 bildet gemeinsam mit einer Druckfeder 25 und stirnseitig angeordneten Lagerkörpern 47 eine Überlast- oder Rutschkupplung 48, die ab einem gewissen Drehmoment die Drehbewegung der äußeren Hülse 23 nicht mehr auf das Nachstellelement 10 überträgt, sondern durchrutscht. Wenn nämlich die Bremsbeläge 4 in Anlage mit der Bremsscheibe 6 gelangen, steigt die auf das Gewindeelement 26 wirkende Kraft und damit das von diesem zu übertragende Moment schlagartig an, so dass die Rutschkupplung 48 durchrutscht und das Rückstellelement 10 nicht mehr dreht. Bis zu diesem Überlastzeitpunkt jedoch wird die Drehbewegung der äußeren Hülse 23 schlupffrei auf das Nachstellelement 10 übertragen, welches sich daher innerhalb der Schraubverbindung 36 der Traverse 7 dreht und auf diese Weise die beiden Druckstempel 2 sukzessive und dem Verschleiß entsprechend in Richtung der Bremsscheibe 6 nachstellt.

Hat der Bremsbelag 4 seine Verschleißgrenze erreicht, d.h. ist der Reibbelag 5 bis auf ein zulässiges Mindestmaß abgetragen, muss er gegen einen neuen Bremsbelag 4 ersetzt werden. Da die neuen Bremsbeläge 4 breiter sind als verschlissene, muss das Nachstellelement 10 über die Schraubverbindung 36 in seine Ausgangslage zurückgestellt werden, wodurch sich die Druckstempel 2 wieder in ihre Ausgangsstellung zurück bewegen.

Die Rückstellung erfolgt über ein für den Monteur von außerhalb des Bremsgehäuses zugängliches Rückstellelement 13, welches beim Ausführungsbeispiel nach Art eines Zahnrades gestaltet ist. Denkbar wären aber auch andere Ausgestaltungen, beispielsweise eine Riemenscheibe. Das Rückstellelement 13 ist im Bereich der außerhalb des bei Bremsbetätigung auftretenden Kraftflusses liegenden seitlichen Erweiterung 8a der Druckplatte 8 drehbar gelagert. Hierzu ist das Rückstellelement 13 mit einem Zapfen 19 in eine Öffnung 15 der seitlichen Erweiterung 8a eingesetzt, und rückseitig über einen Sicherungsring 16 gegen ein Herausrutschen aus seiner Lagerung gesichert. Das Rückstellelement 13 ist mit einer Außenverzahnung 17 versehen, die nach Art eines Getriebes mit einer Verzahnung 14 des Nachstellelements 10 kämmt. Während sich das Nachstellelement 10 also bei der Nachstellung sukzessive dreht, wird auch das Rückstellelement 13 gedreht. Das Rückstellelement 13 ist allerdings ohne Nachstellfunktion, d.h. es dient nicht etwa zur Übertragung irgendwelcher zur Nachstellung erforderlicher Kräfte. Das Rückstellelement 13 ist frei drehend und während des Bremsbetriebs keinen nennenswerten Kräften ausgesetzt. Das Rückstellelement 13 wird ausschließlich bei der beim Belagwechsel erforderlichen Rückstellung des Nachstellelements 10 nennenswerten Kräften ausgesetzt.

Einzelheiten des Rückstellelements 13 lassen sich der Schnittdarstellung in Fig. 4 entnehmen. Das Rückstellelement 13 ist im Durchmesser kleiner gestaltet ist als der die Verzahnung 14 aufweisende Zahnradbereich des Nachstellelements 10. Insgesamt ergibt sich daher ein Untersetzungsgetriebe. Das Rückstellelement 13 ist im Bereich seiner Drehlagerung um die Drehachse D mit einem zentralen Eingriffsmittel 18 versehen, das für den Monteur von außerhalb des Bremsgehäuses 1 z.B. durch eine dort vorgesehene Öffnung erreichbar ist. Mit diesem Eingriffsmittel 18 kann der Monteur ein Montagewerkzeug von außerhalb des Bremsgehäuses 1 in Eingriff bringen, und auf diese Weise das Nachstellelement 10 in seine Ausgangslage zurückdrehen. Die Achse D des Rückstellelements 13 verläuft parallel zur Achse A des Nachstellelements 10, wobei der Abstand der beiden Achsen so gewählt ist, dass dem Monteur zuspannseitig, d.h. seitlich neben dem Zuspannhebel 40 der Betätigungseinrichtung 9, hinreichend Platz für seine Montagearbeiten bleibt. Insbesondere ist es nicht erforderlich, zunächst den Zuspannhebel 9 (Fig. 1) oder andere Teile der Zuspanneinrichtung zu entfernen, um erst dann die Rückstellung des zentral angeordneten Nachstellelements 10 vornehmen zu können.

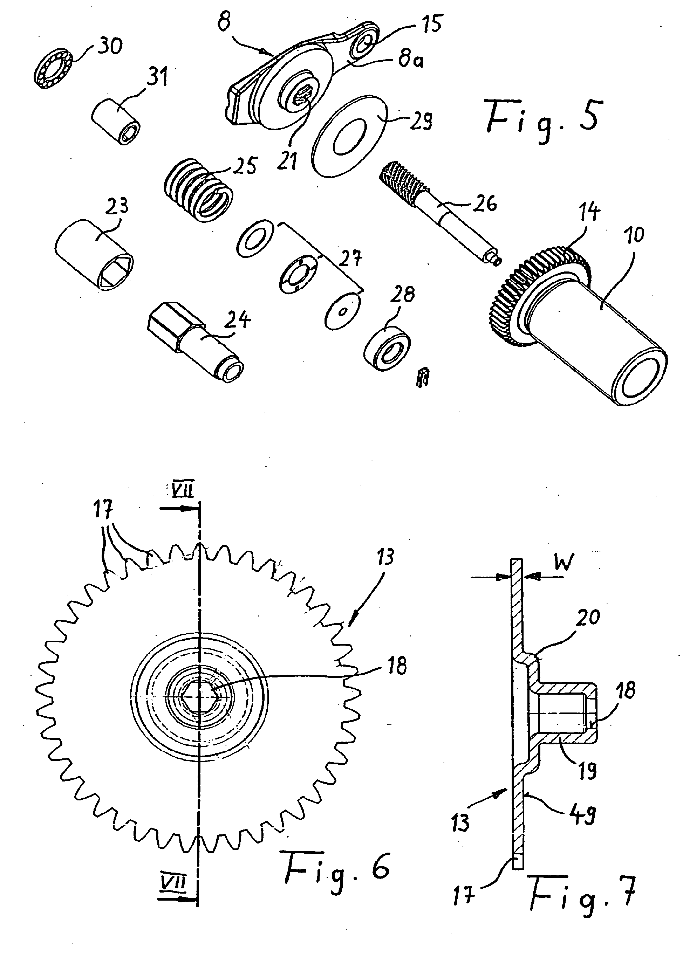

In Fig. 5 dargestellt ist eine Explosionsdarstellung der Teile der Nachstelleinheit 11. Zu erkennen ist die Gestaltung der Druckplatte 8 mit der seitlichen Erweiterung 8a, der im Bereich des Nachstellelements 10 vorgesehene Absatz 35 und das Innengewinde 38. Ebenfalls zu erkennen ist die runde Lageröffnung 15, in welcher das Rückstellelement 13 aufgenommen wird.

Einzelheiten des erfindungsgemäßen Rückstellelements 13 sind in den Fign. 5 und 6 dargestellt. Bei der Ausführung in Fig. 6 sind die Eingriffsmittel 18 nach Art eines Innensechskants gestaltet, wobei auch andere Standard-Eingriffsmittel, etwa TORX-Profile o.ä. eingesetzt werden können.

Die konstruktions- und fertigungstechnischen Vorteile des Rückstellelements 13 werden insbesondere anhand der Schnittdarstellung in Fig. 7 deutlich. Das Rückstellelement 13 weist im Querschnitt eine Wandstärke W auf, die über die gesamte Querschnittsfläche betrachtet im Wesentlichen gleich ist. Das Rückstellelement 13 ist ein durch Umformen einstückig gefertigtes Blechteil, in welchem die Ausnehmung 18 durch Stanzen ausgenommen ist. Der Hohlzapfenbereich 19 ist in seinem Außendurchmesser an den Durchmesser der ihn drehbar lagernden Öffnung 15 der Druckplatte 8 angepaßt, wobei sich an den Hohlzapfen 19 eine ringförmige Abwinklung 20 anschließt, die einen Abstand zwischen der Vorderseite 33 der Druckplatte 8 und der Stirnfläche 49 des Rückstellelements 13 sicherstellt.

Sowohl die Ausnehmung 18 wie auch der Hohlzapfen 19, die topfförmige Abwinklung 20 und die Verzahnung 17 des Zahnrades 13 können in einem einzigen Arbeitshub beispielsweise einer Stanzmaschine vollautomatisch gefertigt werden. Alternativ kann es auch von Vorteil sein, das Rückstellelement 13 als ein aus Kunststoff bestehendes Spritzgussteil zu fertigen.

### Bezugszeichenliste

- 1: Bremsgehäuse
- 2: Druckstempel
- 3: Belagplatte
- 4: Bremsbelag
- 5: Reibbelag
- 6: Bremsscheibe
- 7: Traverse, Joch
- 8: Druckplatte
- 8a: Erweiterung
- 9: Zuspanneinrichtung
- 10: Nachstellelement
- 11: Nachstelleinheit
- 12: Druckfläche
- 13: Rückstellelement, Zahnrad
- 14: Verzahnung
- 15: Öffnung
- 16: Sicherungsring
- 17: Verzahnung
- 18: Eingriffsmittel
- 19: Zapfen, Hohlzapfen
- 20: Abwinklung
- 21: Gewinde, Innengewinde
- 22: Gewinde, Außengewinde
- 23: Hülse, Außenhülse
- 24: Hülse, Innenhülse
- 25: Druckfeder
- 26: Gewindeelement
- 27: Wälzlager
- 28: Gehäuseteil
- 29: Gleitscheibe
- 30: Drehmomentkupplung
- 31: Einwegkupplung
- 32: Rückseite
- 33: Vorderseite
- 34: Anlage
- 35: Absatz
- 36: Schraubverbindung
- 39: Außengewinde
- 40: Zuspannhebel
- 41: Gelenk
- 42: Wälzlagerung
- 43: Wälzkörper
- 44: Wälzkörper
- 45: Wälzbahn
- 46: Wälzbahn
- 47: Lagerkörper
- 48: Rutschkupplung

- F: Btätigungskraft
- D: Drehachse
- L: Lüftspiel
- M: Materialstärke
- A: Achse, Drehachse
- W: Wandstärke

## Patentansprüche

1. Radbremse mit
a) mindestens einem gegen einen Bremsbelag (4) arbeitenden und innerhalb eines Bremsgehäuses (1) bewegbaren Druckstempel (2),
b) einer Zuspanneinrichtung (9) zur Betätigung des Druckstempels (2),
c) einer Nachstelleinheit (11) mit einem sich in Abhängigkeit des Bremsverschleißes sukzessive drehenden Nachstellelement (10) zur Nachstellung des Lüftspiels (L) und
d) einem in dem Bremsgehäuse (1) angeordneten Rückstellelement (13) ohne Nachstellfunktion zum Zurückdrehen der Nachstelleinheit (11) im Falle eines Bremsbelagwechsels,
**dadurch gekennzeichnet,**
**dass** das Rückstellelement (13) drehbar an einem der Zuspannbewegung folgenden Bauteil (8) gelagert ist.

2. Radbremse nach Anspruch 1, **dadurch gekennzeichnet, dass** das Bauteil (8) eine in Richtung des Druckstempels (2) in dem Bremsgehäuse (1) bewegliche Druckplatte ist, gegen die sich die Zuspanneinrichtung (9) bei der Zuspannung abstützt.

3. Radbremse nach Anspruch 2, **dadurch gekennzeichnet, dass** die Druckplatte (8) an ihrer Rückseite (32) eine Druckfläche (12) aufweist, an der sich die Zuspanneinrichtung (9) abstützt.

4. Radbremse nach Anspruch 3, **dadurch gekennzeichnet, dass** die Druckfläche (12) eine im Querschnitt schalenartige Ausnehmung der Druckplatte (8) ist.

5. Radbremse nach einem der Ansprüche 2 bis 4, **dadurch gekennzeichnet, dass** das Nachstellelement (10) drehbar an der Druckplatte (8) gelagert ist.

6. Radbremse nach Anspruch 5, **dadurch gekennzeichnet, dass** das Nachstellelement (10) über eine Schraubverbindung (36) mit dem Druckstempel (2) verbunden ist.

7. Radbremse nach einem der Ansprüche 2 bis 6, **dadurch gekennzeichnet, dass** die Druckplatte (8) neben der Druckfläche (12) angeordnet eine seitliche Erweiterung (8a) aufweist, an der das Rückstellelement (13) gelagert ist.

8. Radbremse nach Anspruch 7, **dadurch gekennzeichnet, dass** die seitliche Erweiterung (8a) eine gegenüber der übrigen Druckplatte (8) reduzierte Materialstärke (M) aufweist.

9. Radbremse nach einem der vorangehenden Ansprüche, **dadurch gekennzeichnet, dass** das Nachstellelement (10) mit einer Verzahnung (14) versehen ist, die mit einer an dem Rückstellelement (13) ausgebildeten Verzahnung (17) kämmt.

10. Radbremse nach Anspruch 9, **dadurch gekennzeichnet, dass** die Verzahnung (17) des Rückstellelements (13) weniger Zähne aufweist als die Verzahnung (14) des Nachstellelements (10).

11. Radbremse nach einem der Ansprüche 2 bis 10, **dadurch gekennzeichnet, dass** das Rückstellelement (13) innerhalb einer Öffnung (15) der Druckplatte (8) drehbar gelagert ist.

12. Radbremse nach einem der vorangehenden Ansprüche, **dadurch gekennzeichnet, dass** das Rückstellelement (13) ein durch Umformen hergestelltes Blechformteil ist.

13. Radbremse nach Anspruch 12, **dadurch gekennzeichnet, dass** das Rückstellelement (13) einen hohlen Zapfen (19) und eine Abwinklung (20) aufweist.

14. Radbremse nach einem der vorangehenden Ansprüche, **dadurch gekennzeichnet, dass** das Rückstellelement (13) mit Mitteln (18) zum Eingriff eines Werkzeugs versehen ist.

15. Radbremse nach einem der vorangehenden Ansprüche, **dadurch gekennzeichnet, dass** das Rückstellelement (13) um eine zur Achse (A) des Nachstellelements (10) parallel versetzte Achse (D) drehbar ist.

16. Druckplatte für Radbremsen, wobei die Druckplatte (8) an ihrer Rückseite (32) eine Druckfläche (12) für eine Zuspanneinrichtung (9), und an ihrer Vorderseite (33) eine Anlage (34) für eine Nachstelleinheit (11) aufweist,
**gekennzeichnet durch**
eine seitlich der Druckfläche (12) angeordnete Erweiterung (8a) mit Mitteln (15) zur drehbaren Lagerung eines Rückstellelements (13) zur Rückstellung eines Nachstellelements (10) der Nachstelleinheit (11) im Falle eines Bremsbelagwechsels.

17. Druckplatte nach Anspruch 16, **dadurch gekennzeichnet, dass** die Druckfläche (12) eine im Querschnitt schalenartige Ausnehmung ist.

18. Druckplatte nach Anspruch 16, **dadurch gekennzeichnet, dass** die seitliche Erweiterung (8a) eine gegenüber der übrigen Druckplatte reduzierte Materialstärke (M) aufweist.

19. Druckplatte nach Anspruch 16, **dadurch gekennzeichnet, dass** die Vorderseite (33) einen Absatz (35) aufweist, dessen Oberfläche die Anlage (34) bildet.

## Claims

1. A wheel brake with
a) at least one pressure ram (2) working against a brake pad (4) and movable inside a brake housing (1),
b) a brake application device (9) for actuating the pressure ram (2),
c) a re-adjustment unit (11) with a re-adjustment element (10) turning in succession in a manner dependent upon the brake wear in order to readjust the clearance (L), and
d) a re-setting element (13) without a re-adjustment function arranged in the brake housing (1) for turning back the re-adjustment unit (11) in the event that the brake pad is changed,
**characterized in that** the re-setting element (13) is mounted in a rotatable manner on a component (8) following the brake application movement.

2. A wheel brake according to claim 1, **characterized in that** the component (8) is a pressure plate which is movable in the brake housing (1) in the direction of the pressure ram (2) and against which the brake application device (9) is supported during the brake application.

3. A wheel brake according to claim 2, **characterized in that** the pressure plate (8) has on the rear side (32) thereof a pressure face (12) on which the brake application device (9) is supported.

4. A wheel brake according to claim 3, **characterized in that** the pressure face (12) is a recess in the pressure plate (8) with a shell-like cross-section.

5. A wheel brake according to any one of claims 2 to 4, **characterized in that** the re-adjustment element (10) is mounted on the pressure plate (8) in a rotatable manner.

6. A wheel brake according to claim 5, **characterized in that** the re-adjustment element (10) is connected to the pressure ram (2) by way of a screw fastening (36).

7. A wheel brake according to any one of claims 2 to 6, **characterized in that** the pressure plate (8) has, arranged adjacent to the pressure face (12), a lateral enlargement (8a) on which the re-setting element (13) is mounted.

8. A wheel brake according to claim 7, **characterized in that** the lateral enlargement (8a) has a reduced thickness of material (M) as compared with the rest of the pressure plate (8).

9. A wheel brake according to any one of the preceding claims, **characterized in that** the re-adjustment element (10) is provided with a set of teeth (14) which meshes with a set of teeth (17) formed on the re-setting element (13).

10. A wheel brake according to claim 9, **characterized in that** the set of teeth (17) of the re-setting element (13) has fewer teeth than the set of teeth (14) of the re-adjustment element (10).

11. A wheel brake according to any one of claims 2 to 10, **characterized in that** the re-setting element (13) is mounted in a rotatable manner inside an opening (15) in the pressure plate (8).

12. A wheel brake according to any one of the preceding claims, **characterized in that** the re-setting element (13) is a moulded sheet-metal part produced by shaping.

13. A wheel brake according to claim 12, **characterized in that** the re-setting element (13) has a hollow pin (19) and an angular offset (20).

14. A wheel brake according to any one of the preceding claims, **characterized in that** the re-setting element (13) is provided with means (18) for the engagement of a tool.

15. A wheel brake according to any one of the preceding claims, **characterized in that** the re-setting element (13) is rotatable about an axis (D) offset parallel to the axis (A) of the re-adjustment element (10).

16. A pressure plate for wheel brakes, wherein the pressure plate (8) has on the rear side (32) thereof a pressure face (12) for a brake application device (9) and on the front side (33) thereof an attachment (34) for a re-adjustment unit (11),
**characterized by** an enlargement (8a) arranged to the side of the pressure face (12) and with means (15) for the rotatable mounting of a re-setting element (13) for re-setting a re-adjustment element (10) of the re-adjustment unit (11) in the event that the brake pad is changed.

17. A pressure plate according to claim 16, **characterized in that** the pressure face (12) is a recess in the pressure plate (8) with a shell-like cross-section.

18. A pressure plate according to claim 16, **characterized in that** the lateral enlargement (8a) has a reduced thickness of material (M) as compared with the rest of the pressure plate.

19. A pressure plate according to claim 16, **characterized in that** the front side (33) has an offset (35), the surface of which forms the attachment (34).

## Revendications

1. Frein de roue, comportant
a) au moins un poinçon de compression (2), travaillant contre une garniture de frein (4) et mobile à l'intérieur d'un carter de frein (1),
b) un dispositif de serrage du frein (9) destiné à actionner le poinçon de compression (2),
c) une unité de réajustage (11) avec un élément de réajustage (10), tournant successivement en fonction de l'usure du frein et destiné à réajuster le jeu de desserrage (L), et
d) un élément de rappel (13), disposé dans le carter de frein (1), sans fonction de réajustage pour ramener en position initiale l'unité de réajustage (11) dans le cas d'un remplacement de la garniture de frein,
**caractérisé en ce que** l'élément de rappel (13) est monté rotatif sur une pièce (8) qui suit le mouvement de serrage du frein.

2. Frein de roue selon la revendication 1, **caractérisé en ce que** la pièce (8) est une plaque de compression, qui est mobile dans la direction du poinçon de compression (2) dans le carter de frein (1) et contre laquelle le dispositif de serrage du frein (9) prend appui au moment du serrage du frein.

3. Frein de roue selon la revendication 2, **caractérisé en ce que** la plaque de compression (8) comporte, sur sa face arrière (32), une surface de compression (12), contre laquelle le dispositif de serrage du frein (9) prend appui.

4. Frein de roue selon la revendication 3, **caractérisé en ce que** la surface de compression (12) est un évidement, en forme de coque sur une coupe transversale, dans la plaque de compression (8).

5. Frein de roue selon l'une quelconque des revendications 2 à 4, **caractérisé en ce que** l'élément de réajustage (10) est monté rotatif sur la plaque de compression (8).

6. Frein de roue selon la revendication 5, **caractérisé en ce que** l'élément de réajustage (10) est relié au poinçon de compression (2) par un assemblage vissé (36).

7. Frein de roue selon l'une quelconque des revendications 2 à 6, **caractérisé en ce que** la plaque de compression (8) comporte un élargissement (8a) latéral, qui est disposé à côté de la surface de compression (12) et sur lequel est monté l'élément de rappel (13).

8. Frein de roue selon la revendication 7, **caractérisé en ce que** l'élargissement (8a) latéral possède une épaisseur de matière (M) diminuée par rapport au reste de la plaque de compression (8).

9. Frein de roue selon l'une quelconque des revendications précédentes, **caractérisé en ce que** l'élément de réajustage (10) est muni d'une denture (14), qui engrène avec une denture (17) réalisée sur l'élément de rappel (13).

10. Frein de roue selon la revendication 9, **caractérisé en ce que** la denture (17) de l'élément de rappel (13) comporte moins de dents que la denture (14) de l'élément de réajustage (10).

11. Frein de roue selon l'une quelconque des revendications 2 à 10, **caractérisé en ce que** l'élément de rappel (13) est monté rotatif à l'intérieur d'une ouverture (15) de la plaque de compression (8).

12. Frein de roue selon l'une quelconque des revendications précédentes, **caractérisé en ce que** l'élément de rappel (13) est une pièce en tôle obtenue par formage.

13. Frein de roue selon la revendication 12, **caractérisé en ce que** l'élément de rappel (13) comporte un tenon (19) creux et un coude (20).

14. Frein de roue selon l'une quelconque des revendications précédentes, **caractérisé en ce que** l'élément de rappel (13) est muni de moyens (18) pour l'engagement d'un outil.

15. Frein de roue selon l'une quelconque des revendications précédentes, **caractérisé en ce que** l'élément de rappel (13) est apte à tourner autour d'un axe (D) décalé parallèlement par rapport à l'axe (A) de l'élément de réajustage (10).

16. Plaque de compression pour des freins de roue, ladite plaque de compression (8) comportant, sur sa face arrière (32), une surface de compression (12) pour un dispositif de serrage du frein (9) et, sur sa face avant (33), un appui (34) pour une unité de réajustage (11),
**caractérisée par**
un élargissement (8a), qui est disposé latéralement par rapport à la surface de compression (12) et qui comporte des moyens (15) pour le montage rotatif d'un élément de rappel (13) destiné à ramener dans sa position initiale un élément de réajustage (10) de l'unité de réajustage (11) dans le cas d'un remplacement de la garniture de frein.

17. Plaque de compression selon la revendication 16, **caractérisée en ce que** la surface de compression (12) est un évidement, en forme de coque sur une coupe transversale.

18. Plaque de compression selon la revendication 16, **caractérisée en ce que** l'élargissement (8a) latéral possède une épaisseur de matière (M) diminuée par rapport au reste de la plaque de compression.

19. Plaque de compression selon la revendication 16, **caractérisée en ce que** la face avant (33) comporte un décrochement (35), dont la surface forme l'appui (34).
